# FASCICULE DE BREVET EUROPEEN

(11) **EP 2 736 808 B1**
(45) Date de publication et mention de la délivrance du brevet: **03.07.2019**
(21) Numéro de dépôt: 12737801.6
(22) Date de dépôt: 19.07.2012
(51) Int. Cl.: B65B 3/02, B29C 49/46

(54) **DISPOSITIF D'INJECTION D'UN LIQUIDE SOUS PRESSION POUR LE FORMAGE D'UN RÉCIPIENT COMPORTANT UNE CHAMBRE DE TRAVAIL AGENCÉE EN AVAL DE MOYENS DE POMPAGE**
VORRICHTUNG ZUR INJEKTION EINER DRUCKFLÜSSIGKEIT ZUM FORMEN EINES BEHÄLTERS MIT EINER NACH EINER PUMPVORRICHTUNG ANGEORDNETEN ARBEITSKAMMER
DEVICE FOR INJECTING A PRESSURIZED LIQUID IN ORDER TO SHAPE A CONTAINER, COMPRISING A WORK CHAMBER ARRANGED DOWNSTREAM FROM PUMPING MEANS

(30) Priorité: 25.07.2011 FR 1156732
(43) Date de publication de la demande: 04.06.2014
(73) Titulaire: Discma AG, 8050 Zürich (CH)
(72) Inventeur: FEUILLOLEY, Guy, F-76930 Octeville Sur Mer (FR)
(74) Mandataire: Lavoix
(86) Numéro de dépôt international: PCT/EP2012/064183
(87) Numéro de publication internationale: WO 2013/014062

(56) Documents cités:
- DE-A1-102004 014 653
- FR-A1- 2 839 277
- US-A- 3 251 915
- US-A1- 2011 135 778

## Description

L'invention concerne un dispositif d'injection d'un liquide sous pression pour le formage de récipients en matériau thermoplastique.

L'invention concerne plus particulièrement un dispositif d'injection d'un liquide incompressible sous pression dans un récipient en matériau thermoplastique préchauffé à l'état d'ébauche pour le formage du récipient dans un état final par déformation, le dispositif d'injection comportant :
- une conduite d'alimentation en liquide qui est destinée à raccorder une source de liquide avec le récipient ;
- des moyens de pompage pour faire circuler le liquide dans la conduite d'alimentation vers le récipient avec une première pression ;
- des moyens de compression pour élever temporairement la pression du liquide contenu dans le récipient jusqu'à une deuxième pression supérieure à la première pression.

La fabrication de récipients en matière thermoplastique, tels que des bouteilles, flacons, etc. est effectuée par le formage de récipients à l'état d'ébauche, qui sont parfois appelés préformes.

Préalablement à la mise en oeuvre du procédé de formage, les récipients à l'état d'ébauche sont chauffés dans un four de conditionnement thermique de manière à leur conférer une structure suffisamment malléable pour le procédé de formage.

Ces récipients à l'état d'ébauche sont ensuite introduits dans une unité de moulage à laquelle sont généralement associés des moyens de soufflage ou d'étirage-soufflage.

A l'issu du procédé de formage, une étape de remplissage est mise en oeuvre. Au cours de cette étape de remplissage, le récipient à l'état final est généralement rempli d'un liquide qui est destiné à être commercialisé ou transporté dans le récipient final.

Le document EP-A-2.143.544 a proposé de modifier le procédé de formage en utilisant un liquide pour finaliser la mise en forme du récipient. Le procédé selon cet état de la technique comporte ainsi une première étape d'expansion partielle du récipient depuis son état d'ébauche jusqu'à un état intermédiaire par soufflage d'un gaz de soufflage à basse pression, puis une deuxième étape de remplissage du récipient dans ledit état intermédiaire avec un liquide de remplissage, et enfin, une troisième étape de prise d'empreinte au cours de laquelle le liquide contenu dans le récipient est mis sous une haute pression afin de conférer sa forme finale au récipient.

Le liquide de remplissage est généralement considéré incompressible par rapport à un gaz. Ceci permet donc une montée en pression efficace et rapide.

Avantageusement, le liquide utilisé lors de la troisième étape de prise d'empreinte est le liquide qui est destiné à être transporté dans le récipient à l'état final. Un tel procédé permet ainsi de remplir le récipient avec le liquide pendant le procédé de formage. Ceci permet notamment de gagner du temps en évitant de rajouter une opération de remplissage après le procédé de formage.

Le document US-2011/135778 divulgue un procédé similaire de formage en utilisant un liquide pour finaliser la mise en forme du récipient dans lequel les moyens de compression sont formés par un piston.

Dans le document WO-A1 -03/095179, on a proposé d'injecter le liquide dans le récipient au moyen d'un vérin comportant une chambre de travail dans laquelle coulisse un piston. La chambre de travail présente un volume qui est au moins égal au volume du récipient à remplir. Ainsi, lorsque le vérin est actionné, le liquide est injecté sous pression dans la préforme. Pour obtenir une haute pression en fin de remplissage, une force supérieure est appliquée au piston.

Cette solution est techniquement satisfaisante. Néanmoins, le vérin utilisé est très encombrant. La présente invention a pour but de fournir un dispositif d'injection de liquide plus performant et moins encombrant.

A cet effet, l'invention propose un dispositif d'injection du type décrit précédemment, caractérisé en ce que les moyens de compression sont formés par un vérin comportant une chambre de travail à volume variable qui est raccordée uniquement à la conduite d'alimentation en aval des moyens de pompage.

Selon d'autres caractéristiques de l'invention :
- le volume maximal de la chambre de travail est sensiblement inférieur au volume total du récipient à l'état final ;
- la chambre de travail comporte un orifice unique d'entrée et de sortie du liquide, l'orifice unique étant raccordé en dérivation à la conduite d'alimentation ;
- la chambre de travail est interposée dans la conduite d'alimentation, la chambre de travail comportant :
   -- un premier orifice d'entrée qui est raccordé à un tronçon amont de la conduite d'alimentation ;
   -- et un deuxième orifice de sortie qui est raccordé à un tronçon aval de la conduite d'alimentation ;
- un moyen anti-reflux est interposé dans la conduite d'alimentation entre les moyens de pompage et la chambre de travail ;
- le moyen anti-reflux est agencé à proximité de la chambre de travail ;
- le premier orifice d'entrée est susceptible d'être obturé lorsque le volume de la chambre de travail est en train de diminuer jusqu'à son volume minimal ;
- les moyens de pompage refoulent le liquide dans la conduite d'alimentation à une pression sensiblement constante ;
- les moyens de pompage sont formés par une pompe motorisée qui présente une cylindrée inférieure au volume total du récipient à l'état final ;
- la chambre de travail est agencée à proximité du récipient.

D'autres caractéristiques et avantages apparaîtront au cours de la lecture de la description détaillée qui va suivre pour la compréhension de laquelle on se reportera aux dessins annexés parmi lesquels :
- la figure 1 est une vue en coupe axiale qui représente une tête d'injection du dispositif d'injection qui est agencée dans une position haute d'attente au-dessus du col d'un récipient qui est agencé dans un moule, le récipient étant à l'état d'ébauche ;
- la figure 2 est une vue similaire à celle de la figure 1 dans laquelle la tête d'injection occupe une position basse d'injection, le joint du mécanisme d'étanchéité est dans une position supérieure de retrait ;
- la figure 3 est une vue similaire à celle de la figure 1 dans laquelle le joint du mécanisme d'étanchéité est dans une position inférieure d'insertion et dans un état rétracté ;
- la figure 4 est une vue similaire à celle de la figure 3 dans laquelle un joint d'étanchéité est dans un état expansé pour fermer le récipient de manière étanche ;
- la figure 5 est une vue schématique qui représente un dispositif d'injection de liquide sous pression réalisé selon un premier mode de réalisation de l'invention ;
- la figure 6 est une vue schématique qui représente un dispositif d'injection de liquide sous pression réalisé selon un deuxième mode de réalisation de l'invention ;
- la figure 7 est une vue schématique qui représente un dispositif d'injection de liquide sous pression réalisé selon un troisième mode de réalisation de l'invention.

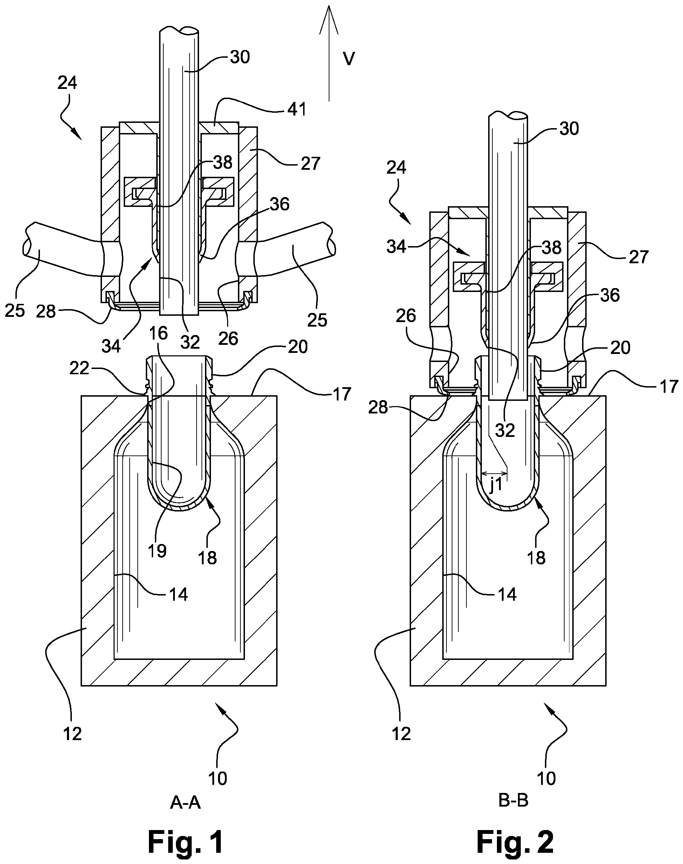

Pour la suite de la description, des éléments présentant des fonctions analogues, identiques ou similaires seront désignés par des mêmes numéros de référence. On a représenté à la figure 1 une unité 10 de moulage qui est apte à mettre en oeuvre un procédé de formage comportant :
- une première étape de soufflage d'un premier fluide sous pression, qui est ici un gaz de soufflage compressible tel que de l'air, puis
- une deuxième étape de remplissage avec un deuxième fluide à basse pression, qui est ici un liquide incompressible de remplissage, tel que de l'eau, qui est destiné à être conditionné dans le récipient ;
- une dernière étape dite de prise d'empreinte, au cours de laquelle le liquide contenu dans le récipient est porté à une haute pression pour appuyer fortement les parois du récipient contre les faces internes de la cavité du moule.

L'unité 10 de moulage comporte un moule 12 qui est généralement réalisé en plusieurs parties qui peuvent être séparées pour introduire et/ou extraire le récipient avant et après son formage.

Le moule comporte une cavité 14 qui est ouverte verticalement vers le haut par l'intermédiaire d'un orifice 16 supérieur réalisé dans une face 17 supérieure horizontale du moule 12.

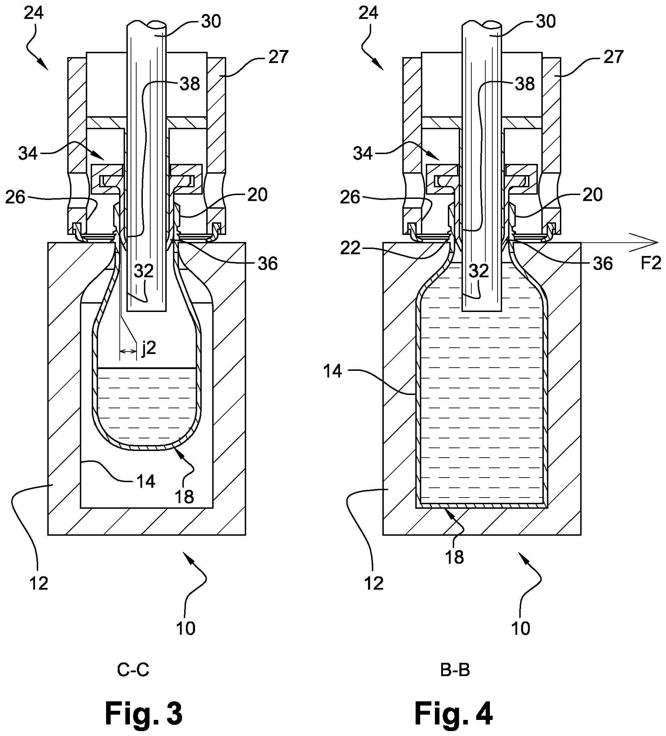

Le moule 12 est destiné à loger un récipient 18 en matériau thermoplastique. Un tel récipient 18 à l'état d'ébauche est généralement appelé préforme. Le récipient 18 à l'état d'ébauche est préalablement conditionné thermiquement afin de rendre le matériau thermoplastique suffisamment malléable pour que le récipient 18 puisse être gonflé, ou mis en expansion, pour former un récipient final présentant la même forme que la cavité 14, comme représenté à la figure 4.

Le récipient 18 comporte généralement un corps 19 creux qui est ouvert vers le haut par l'intermédiaire d'un orifice délimité radialement par un col 20 d'axe vertical, encore appelé goulot. Le corps 19 et le col 20 sont séparés par une collerette 22 externe. Seul le corps 19 du récipient 18 à l'état d'ébauche est logé dans la cavité 14 du moule 12, le col 20 s'étendant à l'extérieur de la cavité 14 en sortant par l'orifice 16 supérieur.

L'unité 10 de moulage comporte une tête 24 d'injection d'au moins deux fluides sous pression dans le col 20 d'orientation axiale d'un récipient 18 pour le formage d'un récipient fini en déformant ledit récipient 18 à l'état d'ébauche par injection successive d'un premier fluide sous pression, puis d'un deuxième fluide sous pression.

Aux figures, la tête 24 d'injection présente globalement une symétrie de révolution par rapport à l'axe vertical du col 20.

Comme expliqué précédemment, le premier fluide est constitué d'un gaz de soufflage tel que de l'air comprimé à 10 bars, tandis que le deuxième fluide est constitué d'un liquide incompressible, tel que de l'eau, susceptible d'être comprimé à une pression de 40 bars.

La tête 24 est susceptible d'être commandée entre :
- une position haute d'attente, telle que représentée à la figure 1, dans laquelle elle est agencée à distance au-dessus de la face 17 supérieure du moule 12 afin de permettre l'introduction d'un récipient 18 à l'état d'ébauche ou l'extraction d'un récipient final ; et
- une position basse d'injection, telle que représentée aux figure 2 à 4, dans laquelle la tête 24 est susceptible d'injecter le gaz de soufflage sous pression et/ou le liquide de remplissage sous pression.

La tête 24 comporte au moins une première conduite 25 pneumatique qui est reliée à une source (non représentée) commandée d'air comprimé. La première conduite 25 pneumatique débouche dans une cloche 26 qui est susceptible de recouvrir le col 20 de manière étanche lorsque la tête 24 est dans sa position basse d'injection. Le bord d'extrémité inférieur de la cloche 26 est équipé d'un joint 28 d'étanchéité qui est destiné à être serré verticalement vers le bas contre la face 17 supérieure du moule 12 ou contre la collerette 22 du col 20.

La tête 24 comporte en outre une deuxième conduite 30 d'alimentation qui est raccordée à un dispositif 31 commandée d'injection de liquide de remplissage sous pression. La partie de la deuxième conduite 30 d'alimentation qui est formée dans le carter 27 présente une orientation d'axe "A" vertical. L'extrémité inférieure de la deuxième conduite 30 d'alimentation débouche dans une buse 32 d'injection d'axe vertical coaxial à l'axe "A" du col 20 du récipient 18. La buse 32 présente un diamètre inférieur au diamètre interne du col 20 de manière que lorsque la buse 32 est insérée dans le col 20, il subsiste un jeu "j1" annulaire entre le col 20 et la buse 32.

La tête 24 d'injection comporte aussi un mécanisme 34 commandé d'étanchéité qui est susceptible d'être commandé entre une position ouverte dans laquelle le gaz de soufflage est susceptible de passer par le premier jeu "j1" annulaire radial pour pénétrer ou sortir du récipient 18, et une position fermée dans laquelle un joint 36 d'étanchéité obture de manière étanche le premier jeu "j1" radial entre la buse 32 et le col 20 du récipient 18.

Ce mécanisme 34 commandé d'étanchéité est notamment utilisé pour permettre la montée en pression du liquide de remplissage contenu dans le récipient 18 à une haute pression, telle que 40 bars, sans faire fuir ledit liquide de remplissage vers la cloche 26 à travers le premier jeu "j1" radial. Ceci permet notamment de respecter des contraintes d'hygiène en empêchant le liquide de remplissage d'être contaminé par contact avec l'extérieur du col 20, le carter 27 et/ou le moule 12.

Le joint 36 annulaire est agencé extérieurement autour de la buse 32. Le joint 36 d'étanchéité est déformable élastiquement entre un état rétracté, tel que représenté aux figures 2 et 3, correspondant à la position ouverte du mécanisme 34 d'étanchéité, et un état expansé, tel que représenté à la figure 4, dans lequel le joint 36 annulaire est plaqué par un piston 38 radialement contre la paroi interne du col 20 du récipient 18 pour obturer de manière étanche le premier jeu radial, et qui correspond à la position fermée du mécanisme 34 d'étanchéité.

La structure et le fonctionnement d'un tel mécanisme d'étanchéité sont décrits plus en détail dans la demande de brevet français No. 1055883.

On décrit à présent en détails le dispositif 31 d'injection de liquide.

Le liquide de remplissage est un liquide considéré comme incompressible, tel que de l'eau.

Le dispositif 31 d'injection du liquide incompressible comporte la conduite 30 d'alimentation en liquide qui raccorde une source 40 de liquide avec l'intérieur du récipient 18.

Des moyens 42 de pompage sont interposés dans la conduite 30 d'alimentation en liquide. Les moyens 42 de pompage permettent de faire circuler le liquide dans la conduite d'alimentation depuis l'amont vers l'aval en direction du récipient 18.

Les moyens 42 de pompage aspirent le liquide incompressible dans la source 40 et ils refoulent le liquide dans la conduite 30 d'alimentation en direction du récipient 18 avec une première pression sensiblement constante. La première pression "P1" dite "basse pression P1" est par exemple comprise entre 5 et 20 bars.

La figure 3 montre le récipient 18 en cours de remplissage avec le liquide basse pression passant à travers la buse 32.

Les moyens 42 de pompage sont formés par une pompe motorisée qui présente une cylindrée inférieure au volume total du récipient 18 à l'état final. Ainsi les moyens 42 de pompage présentent un encombrement réduit. Ceci permet d'obtenir un dispositif 31 d'injection très compact. Il s'agit par exemple d'une pompe à pistons ou d'une pompe à palettes.

En outre, le dispositif 31 d'injection comporte aussi des moyens 44 de compression pour élever temporairement la pression du liquide contenu dans le récipient 18 à une deuxième pression "P2" supérieure à la première pression "P1". La deuxième pression sera désignée "haute pression P2" par la suite. Le liquide est mis sous haute pression "P2" dans le récipient 18 lorsque le joint 36 est dans son état expansé. Ceci permet de comprimer la paroi du récipient 18 contre les faces de la cavité 14 pour conférer au récipient 18 sa forme finale.

Les moyens 44 de compression sont formés par des éléments distincts des moyens 42 de pompage.

Les moyens 44 de compression sont équipés d'un vérin 46 qui comporte une chambre 48 de travail à volume variable entre un volume maximal et un volume minimal. La chambre 48 de travail est raccordée uniquement à la conduite 30 d'alimentation.

La chambre 48 de travail est raccordée à la conduite 30 d'alimentation en aval des moyens 42 de pompage et en amont du récipient 18.

Le vérin 46 est ici formé par un vérin à piston. La chambre 48 de travail est ainsi délimitée radialement et verticalement vers le bas par un cylindre. Elle est délimitée verticalement vers le haut par un piston 50 qui est monté coulissant dans le cylindre pour faire varier le volume de la chambre 48 de travail.

En variante, on comprendra que le vérin peut être d'un autre type connu de l'homme du métier, tel qu'un vérin souple ou un vérin à piston rotatif.

Le volume maximal de la chambre 48 de travail est sensiblement inférieur au volume total du récipient 18 final. En effet, le liquide est destiné à être comprimé à haute pression "P2" uniquement lors de la dernière étape de formage, illustrée à la figure 4.

Lorsque cette étape est enclenchée, le récipient 18 présente un volume très proche de son volume final. De plus, le récipient 18 et la conduite 30 d'alimentation sont déjà remplis de liquide à basse pression "P1". Ainsi, lorsqu'on augmente la pression du liquide pour atteindre la haute pression "P2" en actionnant le piston 50, le volume du récipient 18 augmente très faiblement par rapport à son volume final, par exemple entre 1% et 10%. Par exemple, pour un récipient final d'une contenance de 1 L, le volume d'eau que doit injecter le vérin 46 dans le récipient 18 sera compris entre 1 cL et 10 cL. Le vérin 46 présente ainsi un encombrement très réduit.

Un moyen 52 anti-reflux est interposé dans la conduite 30 d'alimentation en amont de la chambre de travail et en aval des moyens 42 de pompage. Ce moyen 52 anti-reflux permet d'éviter que le liquide à haute pression "P2" ne soit refoulé vers les moyens 42 de pompage et vers la source 40.

Le moyen 52 anti-reflux est ici formé par un clapet anti-retour. On comprendra cependant que tout autre moyen connu de l'homme du métier pour empêcher le refoulement du liquide à haute pression vers la source peut être utilisé.

Le moyen 52 anti-reflux est avantageusement agencé à proximité de la chambre 48 de travail. Ceci permet d'éviter que le tronçon de la conduite 30 d'alimentation qui est agencé en amont de la chambre 48 de travail ne soit soumis à la haute pression "P2". La conduite 30 d'alimentation risquerait en effet de se déformer. Ceci provoquerait, d'une part, un risque de rupture de la conduite 30 d'alimentation, et, d'autre part, une augmentation inutile du volume du vérin 46.

Pour les mêmes raisons, la chambre 48 de travail est agencée à proximité du récipient 18, c'est-à-dire à proximité du moule 12, afin de réduire la longueur du tronçon de conduite 30 d'alimentation raccordant la chambre 48 de travail avec le récipient 18.

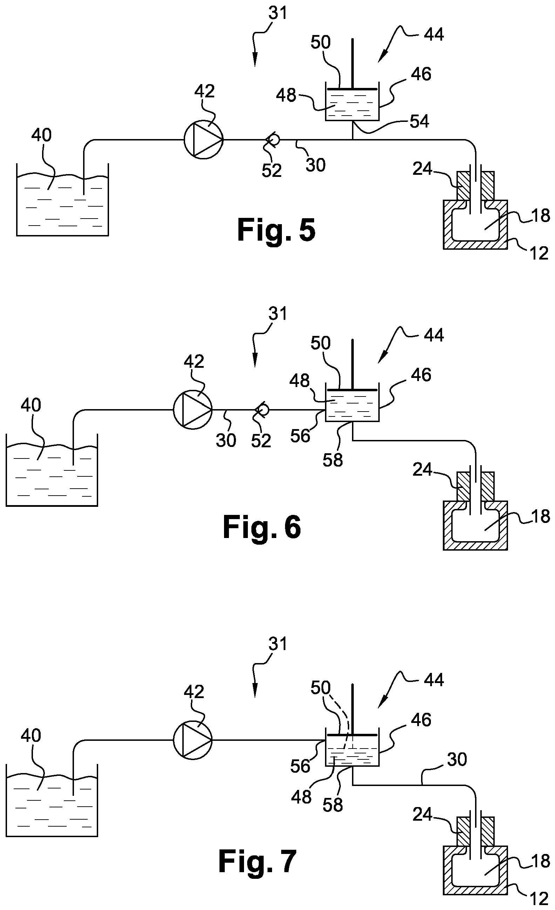

Dans le premier mode de réalisation de l'invention qui est représenté à la figure 5, la chambre 48 de travail comporte un orifice 54 unique d'entrée et de sortie du liquide. L'orifice 54 unique est raccordé en dérivation à la conduite 30 d'alimentation. Ainsi, le liquide refoulé par les moyens 42 de pompage ne circule pas à travers la chambre 48 de travail avant d'atteindre le récipient 18. L'orifice 54 unique est avantageusement agencé en regard du piston 50.

Dans un deuxième mode de réalisation de l'invention qui est représenté à la figure 6, la chambre 48 de travail est interposée dans la conduite 30 d'alimentation. La chambre 48 de travail comporte alors un premier orifice 56 d'entrée qui est raccordé à un tronçon amont de la conduite 30 d'alimentation, et un deuxième orifice 58 de sortie qui est raccordé à un tronçon aval de la conduite 30 d'alimentation. Ainsi, le liquide refoulé par les moyens 42 de pompage circule à travers la chambre 48 de travail avant d'atteindre le récipient 18.

L'orifice 58 de sortie est agencé en regard du piston 50 tandis que l'orifice d'entrée est agencé dans la paroi cylindrique de la chambre 48 de travail.

Un troisième mode de réalisation est représenté à la figure 7. Ce troisième mode de réalisation est très similaire au deuxième mode de réalisation de l'invention. Seules les différences entre ces deux modes de réalisation seront décrites par la suite.

Dans ce mode de réalisation, l'orifice 56 d'entrée est agencé de manière à déboucher dans la chambre 48 de travail lorsque le piston 50 occupe une position correspondant au volume maximal de la chambre 48, et de manière à être obturé par une paroi du piston 50 lorsque ce dernier coulisse jusqu'à une position correspondant au volume minimal de la chambre 48. Ainsi, ladite paroi du piston forme le moyen 52 anti-reflux. Il n'est plus nécessaire d'agencer un clapet anti-retour en amont de la chambre 48 de travail, car le piston 50 empêche le retour du liquide vers la source 40 lorsqu'il coulisse.

Lors du fonctionnement du dispositif selon l'un quelconque des modes de réalisation, du liquide est aspiré dans la chambre 48 de travail lorsque le piston coulisse en direction de sa position correspondant au volume maximal de la chambre 48 de travail. Cette opération d'aspiration est avantageusement réalisée pendant la première étape du procédé de formage pour ne pas perturber l'écoulement du liquide vers le récipient 18 lors de la deuxième étape de formage.

Le dispositif d'injection décrit précédemment est aussi applicable à un dispositif de moulage uniquement par injection de liquide. Dans ce cas, le dispositif de moulage ne comporte pas de moyens d'injection d'un gaz de soufflage. L'opération de remplissage de la chambre 48 de travail est alors réalisée lors de l'intervalle de temps entre le déchargement du récipient à l'état final et le chargement d'un nouveau récipient à l'état d'ébauche.

L'invention permet d'obtenir un dispositif 31 d'injection peu encombrant pour réaliser une augmentation de pression du liquide dans le récipient jusqu'à la haute pression "P2".

## Revendications

1. Dispositif (31) d'injection d'un liquide incompressible sous pression dans un récipient (18) en matériau thermoplastique préchauffé à l'état d'ébauche pour le formage du récipient (18) dans un état final par déformation, le dispositif (31) d'injection comportant:
- une conduite (30) d'alimentation en liquide qui est destinée à raccorder une source (40) de liquide avec le récipient (18) ;
- des moyens (42) de pompage pour faire circuler le liquide dans la conduite (30) d'alimentation vers le récipient (18) avec une première pression (P1);
- des moyens (44) de compression pour élever temporairement la pression du liquide contenu dans le récipient (18) jusqu'à une deuxième pression (P2) supérieure à la première pression (P1) ;
**caractérisé en ce que** les moyens (44) de compression sont formés par un vérin comportant une chambre (48) de travail à volume variable qui est raccordée uniquement à la conduite (30) d'alimentation en aval des moyens (42) de pompage.

2. Dispositif (31) selon la revendication 1, **caractérisé en ce que** le volume maximal de la chambre (48) de travail est sensiblement inférieur au volume total du récipient (18) à l'état final.

3. Dispositif (31) selon l'une quelconque des revendications précédentes, **caractérisé en ce que** la chambre (48) de travail comporte un orifice (54) unique d'entrée et de sortie du liquide, l'orifice (54) unique étant raccordé en dérivation à la conduite (30) d'alimentation.

4. Dispositif (31) selon l'une quelconque des revendications 1 ou 2, **caractérisé en ce que** la chambre (48) de travail est interposée dans la conduite (30) d'alimentation, la chambre (48) de travail comportant :
- un premier orifice (56) d'entrée qui est raccordé à un tronçon amont de la conduite (30) d'alimentation ;
- et un deuxième orifice (58) de sortie qui est raccordé à un tronçon aval de la conduite (30) d'alimentation.

5. Dispositif (31) selon l'une quelconque des revendications précédentes, **caractérisé en ce qu'**un moyen (52) anti-reflux est interposé dans la conduite (30) d'alimentation entre les moyens (42) de pompage et la chambre (48) de travail.

6. Dispositif (31) selon la revendication précédente, **caractérisé en ce que** le moyen (52) anti-reflux est agencé à proximité de la chambre (48) de travail.

7. Dispositif (31) selon la revendication 4, **caractérisé en ce que** le premier orifice (56) d'entrée est susceptible d'être obturé lorsque le volume de la chambre (48) de travail est en train de diminuer jusqu'à son volume minimal.

8. Dispositif (31) selon l'une quelconque des revendications précédentes, **caractérisé en ce que** les moyens (42) de pompage refoulent le liquide dans la conduite (30) d'alimentation à une pression (P1) sensiblement constante.

9. Dispositif (31) selon l'une quelconque des revendications précédentes, **caractérisé en ce que** les moyens (42) de pompage sont formés par une pompe motorisée qui présente une cylindrée inférieure au volume total du récipient (18) à l'état final.

10. Dispositif (31) selon l'une quelconque des revendications précédentes, **caractérisé en ce que** la chambre (48) de travail est agencée à proximité du récipient (18).

## Patentansprüche

1. Einspritzvorrichtung (31) einer unter Druck stehenden, inkompressiblen Flüssigkeit in einen Empfänger (18) aus einem vorgewärmten, thermoplastischen Material in einem Rohzustand zum Formen des Empfängers (18) in einen Endzustand durch Verformen, wobei die Einspritzvorrichtung (31) aufweist:
- eine Versorgungsleitung (30) einer Flüssigkeit, welche eingerichtet ist, um eine Flüssigkeitsquelle (40) an den Empfänger (18) anzuschließen,
- Pumpmittel (42), um die Flüssigkeit in der Versorgungsleitung (30) in Richtung zum Empfänger (18) mit einem ersten Druck (P1) strömen zu lassen,
- Druckmittel (44), um temporär den Druck der Flüssigkeit, welche im Empfänger (18) enthalten ist, bis auf einen zweiten Druck (P2) zu steigern, welcher größer als der erste Druck (P1) ist,
**dadurch gekennzeichnet, dass** die Druckmittel (44) durch einen Zylinder gebildet sind, welcher eine Arbeitskammer (48) mit einem variablen Volumen aufweist, die an die Versorgungsleitung (30) nur stromabwärts der Pumpmittel (42) angeschlossen ist.

2. Vorrichtung (31) gemäß Anspruch 1, **dadurch gekennzeichnet, dass** das Maximalvolumen der Arbeitskammer (48) deutlich kleiner ist als das Gesamtvolumen des Empfängers (18) im Endzustand.

3. Vorrichtung (31) gemäß irgendeinem der vorhergehenden Ansprüche, **dadurch gekennzeichnet, dass** die Arbeitskammer (48) eine einzige Öffnung (54) zum Einlassen und Auslassen der Flüssigkeit aufweist, wobei die einzige Öffnung (54) mit der Versorgungsleitung (30) abzweigend verbunden ist.

4. Vorrichtung (31) gemäß irgendeinem der Ansprüche 1 oder 2, **dadurch gekennzeichnet, dass** die Arbeitskammer (48) in die Versorgungsleitung (30) eingesetzt ist, wobei die Arbeitskammer (48) aufweist:
- eine erste Eintrittsöffnung (56), welche mit einem Stromaufwärts-Abschnitt der Versorgungsleitung (30) verbunden ist,
- eine zweite Auslassöffnung (58), welche mit einem Stromabwärts-Abschnitt der Versorgungsleitung (30) verbunden ist.

5. Vorrichtung (31) gemäß irgendeinem der vorhergehenden Ansprüche, **dadurch gekennzeichnet, dass** ein Rückströmverhinderungsmittel (52) in der Versorgungsleitung (30) zwischen den Pumpmitteln (42) und der Arbeitskammer (48) angeordnet ist.

6. Vorrichtung (31) gemäß dem vorhergehenden Anspruch, **dadurch gekennzeichnet, dass** das Rückströmverhinderungsmittel (52) in der Nähe der Arbeitskammer (48) angeordnet ist.

7. Vorrichtung (31) gemäß dem Anspruch 4, **dadurch gekennzeichnet, dass** die erste Einlassöffnung (56) geeignet ist, um verschlossen zu sein, wenn sich das Volumen der Arbeitskammer (48) dabei befindet, sich bis zu seinem Minimalvolumen zu verringern.

8. Vorrichtung (31) gemäß irgendeinem der vorhergehenden Ansprüche, **dadurch gekennzeichnet, dass** die Pumpmittel (42) die Flüssigkeit in der Versorgungsleitung (30) bei einem im Wesentlichen konstanten Druck (P1) fördern.

9. Vorrichtung (31) gemäß irgendeinem der vorhergehenden Ansprüche, **dadurch gekennzeichnet, dass** die Pumpmittel (42) durch eine motorgetriebene Pumpe gebildet sind, welche einen Zylinder aufweisen, der kleiner ist als das Gesamtvolumen des Empfängers (18) im Endzustand.

10. Vorrichtung (31) gemäß irgendeinem der vorhergehenden Ansprüche, **dadurch gekennzeichnet, dass** die Arbeitskammer (48) in der Nähe des Empfängers (18) angeordnet ist.

## Claims

1. Device (31) for injecting an incompressible liquid under pressure into a container (18) made of thermoplastic material preheated in the preform state in order to shape the container (18) into a final state by deformation, the injection device (31) comprising:
- a supply pipe (30) for liquid which is to connect a source (40) of liquid to the container (18);
- pumping means (42) for circulating the liquid in the supply pipe (30) to the container (18) at a first pressure (P1);
- compression means (44) for temporarily increasing the pressure of the liquid contained in the container (18) to a second pressure (P2) which is greater than the first pressure (P1);
**characterised in that** the compression means (44) are formed by a cylinder having a work chamber (48) of variable volume which is connected only to the supply pipe (30) downstream of the pumping means (42).

2. Device (31) according to claim 1, **characterised in that** the maximum volume of the work chamber (48) is substantially less than the total volume of the container (18) in the final state.

3. Device (31) according to any one of the preceding claims, **characterised in that** the work chamber (48) has a single inlet and outlet orifice (54) for the liquid, the single orifice (54) being connected to the supply pipe (30) through a bypass circuit.

4. Device (31) according to either claim 1 or claim 2, **characterised in that** the work chamber (48) is interposed in the supply pipe (30), the work chamber (48) having:
- a first, inlet orifice (56) which is connected to an upstream portion of the supply pipe (30);
- and a second, outlet orifice (58) which is connected to a downstream portion of the supply pipe (30).

5. Device (31) according to any one of the preceding claims, **characterised in that** an anti-reflux means (52) is interposed in the supply pipe (30) between the pumping means (42) and the work chamber (48).

6. Device (31) according to the preceding claim, **characterised in that** the anti-reflux means (52) is arranged close to the work chamber (48).

7. Device (31) according to claim 4, **characterised in that** the first, inlet orifice (56) is capable of being closed off when the volume of the work chamber (48) is decreasing to its minimum value.

8. Device (31) according to any one of the preceding claims, **characterised in that** the pumping means (42) deliver the liquid into the supply pipe (30) at a substantially constant pressure (P1).

9. Device (31) according to any one of the preceding claims, **characterised in that** the pumping means (42) are formed by a motorised pump which has a displacement less than the total volume of the container (18) in the final state.

10. Device (31) according to any one of the preceding claims, **characterised in that** the work chamber (48) is arranged close to the container (18).
